(19) Europäisches Patentamt
European Patent Office
Office européen des brevets

(11) **EP 3 463 833 B1**

(12) **EUROPÄISCHE PATENTSCHRIFT**

(45) Veröffentlichungstag und Bekanntmachung des Hinweises auf die Patenterteilung:
**06.04.2022 Patentblatt 2022/14**

(21) Anmeldenummer: **17707824.3**

(22) Anmeldetag: **27.02.2017**

(51) Internationale Patentklassifikation (IPC):
**B29C 73/16** (2006.01) **B29L 30/00** (2006.01)

(52) Gemeinsame Patentklassifikation (CPC):
**B29C 73/163; B29C 73/166;** B29L 2030/00

(86) Internationale Anmeldenummer:
**PCT/EP2017/054469**

(87) Internationale Veröffentlichungsnummer:
**WO 2017/207121 (07.12.2017 Gazette 2017/49)**

(54) **VERFAHREN UND VORRICHTUNG ZUM ABDICHTEN UND AUFPUMPEN AUFBLASBARER GEGENSTÄNDE UND DICHTMITTEL**

METHOD AND DEVICE FOR SEALING AND INFLATING INFLATABLE ARTICLES, AND SEALING AGENT

PROCÉDÉ ET DISPOSITIF POUR OBTURER ET GONFLER DES ARTICLES GONFLABLES ET PRODUIT D'ÉTANCHÉITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.05.2016 DE 102016209302**

(43) Veröffentlichungstag der Anmeldung:
**10.04.2019 Patentblatt 2019/15**

(73) Patentinhaber: **Continental Reifen Deutschland GmbH**
**30165 Hannover (DE)**

(72) Erfinder:
• **ZAUM, Christopher**
**30926 Seelze (DE)**

• **BIALACH, Philip Mathias**
**30659 Hannover (DE)**
• **DETERING, Rainer**
**31535 Neustadt am Rbge. (DE)**

(74) Vertreter: **Continental Corporation**
**c/o Continental AG**
**Intellectual Property**
**Postfach 169**
**30001 Hannover (DE)**

(56) Entgegenhaltungen:
| | |
|---|---|
| **EP-A1- 2 889 352** | **DE-A1- 19 948 706** |
| **DE-A1-102014 224 491** | **DE-T5-112014 001 275** |
| **DE-U1- 29 812 740** | **DE-U1-202012 101 110** |
| **US-A- 4 501 825** | **US-A1- 2012 309 867** |

EP 3 463 833 B1

**Beschreibung**

Die Erfindung betrifft ein Verfahren zum Abdichten und Aufpumpen aufblasbarer Gegenstände, insbesondere zum Abdichten und Aufpumpen von Kraftfahrzeugreifen, wobei mit Hilfe eines durch vorzugsweise einen Elektromotor angetriebenen Kompressors ein Abdicht- bzw. Pumpdruck erzeugt wird, mit dem über eine Ventil- und Verteilereinrichtung für Dichtmittel und Druckgas und über Druckluft- bzw-Dichtmittelschläuche zwischen Ventil- und Verteilereinrichtung und einem Eingangsventil bzw. einer Einlassdüse des aufblasbarem Gegenstands ein in einem an die Ventil- und Verteilereinrichtung angeschlossenen Dichtmittelbehälter befindliches Dichtmittel in den aufblasbaren Gegenstand gefördert wird und gleichzeitig der aufblasbare Gegenstand nach Abdichtung auf einen vorgegebenen Betriebsdruck aufgepumpt wird.

Weiterhin betrifft die Erfindung eine Vorrichtung sowie ein besonders geeignetes Mittel zur Durchführung des Verfahrens, nämlich ein Dichtmittel.

Bei Reifenpannen besteht in aller Regel das Problem, dass - wie beispielsweise bei einem PKW bisher üblich - ein gefüllter und auf einer Felge montierter Reservereifen mitgeführt werden muss, der dann anstelle des Rades mit dem defekten Reifen montiert wird, wonach der defekte Reifen in dem für den Reservereifen vorgesehenen Stauraum im Fahrzeug befestigt werden und später einer Reparatur zugeführt werden muss. Hierzu ist es nicht nur oft notwendig, ein beladenes Fahrzeug auszuräumen, um an den entsprechenden Stauraum zu gelangen, sondern es muss auch das Fahrzeug selbst mit Wagenhebern aufgebockt und eine umständliche Reparaturarbeit durchgeführt werden.

Um diese Nachteile zu vermeiden, sind bereits seit längerer Zeit Reparatursätze oder Pannensets zur temporären Reparatur des Reifens bekannt, die einen Kompressor, ein im Reifen koagulierendes Dichtmittel, meistens ein Latexmilch-Gemisch, die entsprechenden Verbindungsschläuche und die notwendigen Kabelanschlüsse zur Energiezufuhr sowie Schalter, Manometer und Bedienelement beinhalten und somit einen ständig einsetzbaren und vollständigen Reparatursatz bereitstellen, mit dem auf das Mitführen eines auf eine Felge aufgezogenen Reserverades oder auf die ständige Kontrolle anderer Reparaturmaterialien wie Schläuche, verschiedene Werkzeugschlüssel, Wagenheber etc. verzichtet werden kann.

Das für solche Pannensets erforderliche Dichtmittel kann entweder vom Benutzer manuell (Squeeze-System) oder mithilfe des Luftkompressors (Pumpsystem) appliziert werden. Im Falle des Pumpsystems wird nach erstmaligem Start des Luftkompressors das Dichtmittel durch einen Überdruck aus dem entsprechenden Dichtmittelbehälter in den beschädigten Reifen gefördert. In einem zweiten Prozessschritt wird nun der beschädigte Reifen bis zu einem bestimmten Mindestdruck mit Luft befüllt. In herkömmlichen Systemen erfolgt dieses Wiederbefüllen des Reifens gegen das Ausströmen der Luft durch die durch die Reifenbeschädigung verursachte Leckage. Ein Abdichten der Leckage erfolgt erst nach Erreichen des Mindestdrucks durch Verteilung des Dichtmittels bei der Weiterfahrt. Ohne eine Reifenbewegung zur Verteilung des Dichtmittels im Reifen ist eine Abdichtung der Reifenleckage daher schwierig.

Da vor dem Abdichten der vorhandenen Beschädigung der entsprechende Reifen bis zu einem bestimmten Mindestdruck aufgefüllt werden muss, sind für einen erfolgreichen Betrieb ausgesprochen leistungsfähige Luftkompressoren erforderlich. Dieser Sachverhalt trägt signifikant zu den Fertigungskosten des Gesamtsystems bei und setzt eine untere Grenze für die Baugröße sowie das Gewicht von Reifenpannensets.

Dokument DE 202012 101110 U1 offenbart ein Verfahren gemäß dem Oberbegriff des Anspruchs 1 und eine Vorrichtung gemäß dem Oberbegriff des Anspruchs 5.

Dokument DE 29812740 U1 offenbart einen "Reparatursatz mit einem tragbaren Behälter zur Aufnahme von Bordwerkzeugen und Arbeitsgeräten für Fahrzeuge, insbesondere zur Aufnahme von Werkzeugen, Arbeitsgeräten und Zubehör zur Instandsetzung von Reifen, wobei der Behälter in Form eines Koffers ausgebildet ist und auf mindestens einer seiner Außenseiten einen Tragegriff aufweist" (s. Anspruch 1).

Dokument DE 19948706 A1 offenbart eine "Vorrichtung zum Abdichten und Aufpumpen von Reifen bei Pannen mit einem druckfesten Behälter (1) zur Aufnahme eines Abdichtmittels (7), wobei der Behälter (1) an eine Druckquelle anschliessbar ist, dadurch gekennzeichnet, dass dem Behälter (1) eine Einrichtung (9) zum Entnehmen von Abdichtmittel (7), Zuführen von Gas und ggf. zum Ausgleichen eines Überdruckes zugeordnet ist" (s. Anspruch 1).

Dokument US 4 501 825 A offenbart ein Dichtmittel gemäß dem Oberbegriff des Anspruchs 8.

Dokument DE 11 2014001275 T5 offenbart ein "Reifenloch-Dichtmittel, das einen Latex und/oder eine Emulsion und ein Gefrierschutzmittel enthält, wobei der Latex und/oder die Emulsion als Feststoffe mindestens ein Polymer und/oder eine organische Verbindung (abgesehen von dem Polymer) enthalten, wobei ein Feststoffgehalt von 20 bis 65 Gew.-% in Bezug auf das Gesamtgewicht des Dichtmittels beträgt, und wobei die Differenz zwischen der spezifischen Dichte der Feststoffe und der spezifischen Dichte einer Mischung aus Wasser und Gefrierschutzmittel in dem Reifenloch-Dichtmittel innerhalb von $\pm 0,1$ liegt." (s. Anspruch 1).

Dokument EP 2889352 A1 offenbart ein Reifenloch-Dichtmittel mit Latex und 55 bis 61 Gew.-% 1,3-Propandiol (vgl. Anspruch 1).

Das deutschsprachige Dokument DE112011100453 T5 zum Dokument US 2012/309867 A1 offenbart ein "Dichtmittel für Reifenlöcher, das einen Naturkautschuklatex, ein Gefrierschutzmittel und eine Acrylemulsion aufweist, wobei ein Massenverhältnis eines Feststoffgehalts des Naturkautschuklatex zu einem Feststoffgehalt der Acrylemulsion (Naturkautschuk/Acrylharz) von 50/50 bis 15/85 beträgt, eine Menge des Gefrierschutzmittels von 100 bis 300 Massenteile pro 100 Massenteile einer Gesamtheit des Feststoffgehalts des Naturkautschuklatex und des Feststoffgehalts der Acrylemulsion beträgt und eine Gesamtmasse des Feststoffgehalts des Naturkautschuklatex und des Feststoffgehalts der Acrylemulsion von 20 bis 40 Masse-% einer Gesamtmasse des Dichtmittels für Reifenlöcher beträgt" (s. Anspruch 1).

Dokument DE 102014224491 A1 offenbart ein "Mittel zum provisorischen Abdichten von aufblasbaren oder aufpumpbaren Gegenständen, insbesondere von Fahrzeugluftreifen, enthaltend zumindest einen Kautschuklatex, zumindest ein Klebharz und zumindest ein Gefrierschutzmittel, dadurch gekennzeichnet, dass es einen Gesamtfeststoffgehalt aus Kautschuklatex und Klebharz von 3 bis 30 Gew.-% aufweist und das oder die Gefrierschutzmittel ausgewählt ist bzw. sind aus der Gruppe bestehend aus 1,2-Propandiol und 1,3-Propandiol und 1,2-Butandiol und 1,3-Butandiol und Glycerol und Triethylenglykol und 0 bis 9 Gew.-% Ethylenglykol" (s. Anspruch 1).

Für die Erfindung bestand also die Aufgabe, die Arbeitsschritte bei Durchführung einer Reparatur mit einem Pannenset zu erleichtern und so zu verändern, dass ein Verteilen des Dichtmittels durch Reifenbewegung möglichst nicht mehr in dem bekannten Ausmaß nötig wird, wobei weiterhin ein Verfahren und eine Vorrichtung bereitzustellen war, die durch eine Verkleinerung der Baugröße bzw. des Gewichts die Fertigungskosten von Reifenpannensets reduzieren kann.

Gelöst wird diese Aufgabe durch die Merkmale des Hauptanspruchs. Weitere vorteilhafte Ausbildungen sind in den Unteransprüchen offenbart. Ebenfalls sind eine Vorrichtung und ein für das Verfahren besonders geeignetes Dichtmittel offenbart, mit deren Hilfe die Verwirklichung einer einzigen allgemeinen erfinderischen Idee ermöglich wird, nämlich die der sicheren und ausreichenden Verteilung des Dichtmittels innerhalb eines aufblasbaren Gegenstandes bzw. Reifens und damit die Einleitung der erforderlichen schnellen Dichtung bzw, Koagulation des Dichtmittels in der Leckage bei Druckerhöhung mit einfachen Mitteln.

Dabei wird bereits im bzw. hinter dem Eingangsventil / der Einlassdüse das Dichtmittel mindestens teilweise dadurch zu einem Aerosol zerstäubt, indem das Dichtmittel bzw. das Dichtmittel-Luft-Gemisch im Eingangsventil bzw. in der Einlassdüse in eine turbulente Strömung mit einer Reynoldszahl $R_e \geq 2300$ überführt wird, wobei die Reynoldszahl der folgenden Gleichung/Ungleichung genügt

$$R_e = \sqrt{2}D\sqrt{p\frac{\rho}{\eta_0^2 \cdot e^{\frac{2\kappa}{T_0 + \Delta T}}}} \geq 2300 \quad ,$$

in der die folgende Parameter enthalten sind:

$T_0$: Umgebungstemperatur,
$D$: Charakteristischer Durchmesser des Eingangsventil bzw. der Einlassdüse,
$\Delta T$: Differenz zwischen der Temperatur im Eingangsventil bzw. in der Einlassdüse und der Umgebungstemperatur,
p: Förderdruck des Dichtmittels bzw. Dichtmittel-Luft-Gemisches,
p: Dichte des Dichtmittels bzw. Dichtmittel-Luft-Gemisches ,
$\eta_0$ Grenzviskosität des Dichtmittels bzw. Dichtmittel-Luft-Gemisches
$\kappa$ charakteristische Temperatur des Dichtmittels bzw. Dichtmittel-Luft-Gemisches.

Mit der so ausgebildeten erfindungsgemäßen Verfahrensweise verteilt sich das erzeugte Aerosol schon während der Befüllungsphase im beschädigten Reifen und wird von der in diesem Stadium noch durch die Leckage ausströmenden Luft mitgenommen. Das Aerosol wird durch den Volumenstrom des Kompressor also in Richtung der Leckageposition transportiert. In der Beschädigung/Leckage selbst bewirkt das Dichtmittel-Aerosol durch Koagulation nun eine Verkleinerung im Sinne einer beginnenden Vorabdichtung der vorhandenen Leckage. Die so beginnende Vorabdichtung bewirkt eine Verkleinerung der Reifenleckage um mindestens 20% bis zu 100% im Vergleich zur bestehenden Leckage ohne Dichtmitteleinsatz. Somit kann die für die Befüllung des Reifens erforderliche Zeit gegenüber einem herkömmlichen Reparaturverfahren einem Pannenset ohne Vorabdichtung signifikant verkürzt bzw. kann ein leistungsschwächerer Kompressor für das System eingesetzt werden.

Die wichtigsten Einflussfaktoren sind hierbei die dynamische Viskosität η des Dichtmittels sowie der Förderdruck p und die Temperaturerhöhung ΔT am Eingangsventil bzw. in der Einlassdüse des beschädigten Reifens, d.h. also an der in diesem Fall als Zerstäuberdüse wirkendem Reifenventil, in bzw. hinter dem die Bildung des Aerosols erfolgt.

Eine vorteilhafte Weiterbildung besteht darin, dass bei einem Förderdruck p des Kompressors von 200 bis 600 kPa das Eingangsventil bzw. die Einlassdüse so erwärmt wird, dass die Temperaturdifferenz $\Delta T$ des Eingangsventils bzw. der Einlassdüse zur Umgebungstemperatur mindestens 10°C, vorzugsweise mindestens 40°C beträgt.

Hierbei wird die benötigte Temperaturerhöhung des als Zerstäuberdüse wirkenden Eingangsventils bzw. der Einlassdüse (bei einem Reifen das Reifenventil) über eine angepasste Auslasstemperatur des Luftkompressors erzielt, wobei bereits die Auslasstemperatur eines typischerweise verwendeten Luftkompressors bauartbedingt deutlich über der Umgebungstemperatur liegt. Die weitere Erhöhung der Temperatur erreicht man durch die Ausbildung einer für das erfindungsgemäße Verfahren besonders geeigneten Vorrichtung zum Beispiel dadurch, dass der Kompressor bzw. die Kompressorbauteile eine thermische Isolation aufweisen oder mindestens teilweise aus Materialen niedriger Wärmeleitfähigkeit bestehen, vorzugsweise aus Kunststoff.

Eine weitere vorteilhafte Ausbildung im Sinne der Verwirklichung einer einzigen allgemeinen erfinderischen Idee besteht bei der Vorrichtung darin, dass die Druckluft- bzw- Dichtmittelschläuche zwischen Ventil- und Verteilereinrichtung und dem Eingangsventil bzw. der Einlassdüse des aufblasbaren Gegenstands thermisch isoliert sind oder aus Materialen niedriger Wärmeleitfähigkeit bestehen. Auch hierdurch wird erreicht, dass die Auslasstemperatur des Luftkompressors über die Dichtmittelschläuche nicht wieder gravierend absinkt.

Kritisch für das erfindungsgemäße Verfahren ist nämlich die Abkühlung der geförderten Luft auf dem Weg bis zur Zerstäuberdüse (Reifenventil). Typischerweise führt dieser Weg über den Dichtmittelbehälter und durch einen Verbindungsschlauch. Um eine effektive Heizung der Düse zu gewährleisten, kann also durch die erfindungsgemäße Ausbildung der Vorrichtungsbauteile erreicht werden, dass die geförderte Luft bzw. das Luft/Dichtmittelgemisch von der Umgebung thermisch isoliert werden.

Hier wiederum wirkt auch vorteilhaft eine weitere Ausgestaltung des Verfahrens, die darin besteht, dass die Erwärmung des Eingangsventils bzw. der Einlassdüse durch eine elektrische Heizung erfolgt. Eine solche Ausbildung der Erwärmung mit einer elektrischen Heizung erhöht zwar grundsätzlich die Komplexität auch der Vorrichtung, kompensiert aber andere Maßnahmen, die für den Erhalt der Temperatur erforderlich sein könnten.

Eine weitere vorteilhafte Ausbildung besteht darin, dass die Vorrichtung mit Einrichtungen versehen ist, die zur Aufhängung oder Befestigung am aufblasbaren Gegenstand bzw. am Kraftfahrzeugreifen und in unmittelbarer Nähe des Eingangsventils bzw. der Einlassdüse dienen. Damit werden die Dichtmittelschläuche sehr kurz und der Wärmeverlust zwischen Auslass des Luftkompressors und Eingangsventil noch einmal minimiert.

Erfindungsgemäß ist der Vorrichtung ein den

Kompressor kühlender Ventilator zugeordnet, der abhängig von der Temperaturdifferenz $\Delta T$ des Eingangsventils bzw. der Einlassdüse steuerbar ist. Soweit die Auslegung des Kompressors es erlaubt, kann dann der Kühlventilator kurzzeitig ausgeschaltet werden, um die Auslasstemperatur am Kompressor weiter zu erhöhen und somit auch die erforderliche Temperatur zur Ausbildung der turbulenten Strömung am Eingangsventil bzw. der Einlassdüse zu erreichen.

Eine weitere vorteilhafte Ausbildung des Verfahrens besteht darin, dass die Erwärmung des Eingangsventils bzw. der Einlassdüse durch eine Erhöhung der Auslasstemperatur des Kompressors dadurch erfolgt, dass eine Kolbenhubfrequenz von mindestens 2000 Hüben pro Minute verwendet wird..

Ein für die Durchführung des Verfahrens besonders geeignetes Dichtmittel ist in seinen Bestandteilen so zusammengesetzt dass das durch Zerstäubung entstandene Aerosol in seiner kondensierten Form folgende Bestandteile enthält:

2 - 25%, vorzugsweise 3 - 20% Latex, bezogen auf den Feststoffgehalt,

2 - 25%, vorzugsweise 3 - 20% eines Klebrigmachers, bezogen auf den Feststoffgehalt,

2 - 40%, vorzugsweise 5 - 30% eines oder mehrerer Glykole mit einem Dampfdruck von 5-15 Pa bei 20°C einem Siedepunkt von 180°C bis 220°C, und

20 - 85%, vorzugsweise 30 - 80% Wasser.

Überraschenderweise hat sich herausgestellt, dass ein solches Dichtmittel bei der Anwendung in dem erfindungsgemäßen Verfahren dazu führt, dass eine sehr schnelle Verteilung im Reifen bzw. im aufblasbaren Gegenstand erfolgt und die oben genannte vorAbdichtung und Koagulation sehr schnell herbeigeführt wird, ohne dass weitere Bewegungen des Reifens erfolgen müssen, also beispielsweise ohne dass das Fahrzeug während des Reparaturvorganges bewegt werden muss.

Eine weitere vorteilhafte Ausbildung des Dichtmittels besteht darin, dass das Latex mindestens teilweise Naturlatex ist, bevorzugt nur Naturlatex aufweist. Dies unterstützt die Aerosolbildung und die schnelle Verteilung, ohne dass die Koagulationsfähigkeit eingeschränkt wird.

Eine weitere vorteilhafte Ausbildung des Dichtmittels besteht darin, dass der Klebrigmacher ein Klebeharz ist, vorzugsweise eine Kolophoniumharzdispersion. Erfindungsgemäß ist die mittlere Partikelgröße des Klebrigmachers kleiner als 0,4 $\mu$m, vorzugsweise kleiner als 0,3 $\mu$m. Eine solche Ausbildung ist in besonderer Weise dazu geeignet, eine optimale Bildung des Aerosols zu erhalten.

Eine weitere vorteilhafte Ausbildung des Dichtmittels besteht darin, dass ein oder mehrere tensidische Sulfonate (starke Tenside ) enthalten sind, vorzugsweise anionische Mono- oder Di-Sulfonate und/oder eines oder mehrere Alkylarylethersulfate, insbesondere dann, wenn die Konzentration der Tenside von 0,5 - 5,0% beträgt.

Damit gelingt es, den Faktor bzw. Parameter $\frac{\rho}{\eta_0^2}$ zu maximieren. Der Zusatz von Tensiden bewirkt hierbei eine Verringerung der Dichte $\rho$ und der dynamischen Viskosität $\eta$. Da jedoch die dynamische Viskosität quadratisch in den beschriebenen Faktor eingeht, wird ab einer bestimmten Konzentration typischerweise die gewünschte Maximierung erzielt. Vorteilhaft ist hier die genannte Konzentration der Tenside von 0,5 - 5,0%.

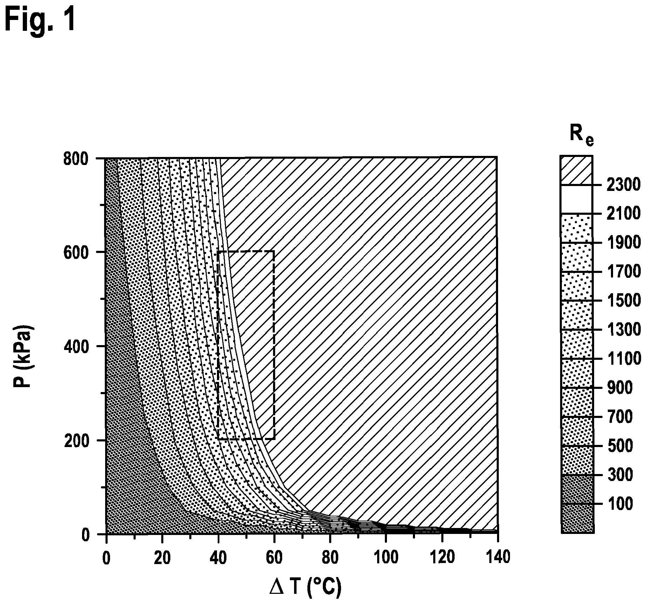

Anhand eines Diagramms wird die erfindungsgemäße Verfahrensausbildung deutlich. Fig. 1 zeigt eine bevorzugte Ausbildung der Verfahrensparameter zur Überführung der Strömung in den turbulenten Bereich mit einer Reynoldszahl $R_e \geq 2300$. Dargestellt sind die Reynoldszahlen für ein erfindungsgemäßes Dichtmittel gegen den Förderdruck P und die Temperaturerhöhung $\Delta T$ an der Zerstäuberdüse. Für typische Förderdrücke von 200 bis 600 kPa muss der Kompressor in diesem Fall also eine Erhöhung der Düsentemperatur um 40 bis 60°C erzielen. Der von der gestrichelten Linie eingeschlossene Bereich gibt den Parameterbereich für das erfindungsgemäße Verfahren an, der bevorzugte erfindungsgemäße Arbeitsbereich ist der in der Umrandung der gestrichelten Linie befindliche schraffierte Bereich.

Die Erhöhung der Düsentemperatur wird, wie oben dargestellt, über eine angepasste Auslasstemperatur des Luftkompressors erzielt. Kritisch ist für die vorliegende Anwendung die Abkühlung der geförderten Luft auf dem Weg bis zum Reifenventil/Reifeneingangsventil. Die komprimierte Luft wird über den Dichtmittelbehälter und durch einen Verbindungsschlauch geführt. Um eine effektive Erwärmung/Heizung der Düse zu gewährleisten, werden die genannten Verfahrensausbildungen und Vorrichtungsgestaltungen durchgeführt. Es wird somit deutlich, dass die Gegenstände der unterschiedlichen Anspruchskategorien einer einheitlichen und gemeinsamen erfinderische Idee folgen und mit ihrem Zusammenwirken den Erfindungserfolg begründen.

**Patentansprüche**

1. Verfahren zum Abdichten und Aufpumpen aufblasbarer Gegenstände,

   insbesondere zum Abdichten und Aufpumpen von Kraftfahrzeugreifen, wobei mit Hilfe eines durch vorzugsweise einen Elektromotor angetriebenen Kompressors ein Abdicht- bzw. Pumpdruck erzeugt wird, wobei mit dem Abdicht- bzw. Pumpdruck über eine Ventil- und Verteilereinrichtung für Dichtmittel und Druckgas und über Druckluft- bzw- Dichtmittelschläuche zwischen Ventil- und Verteilereinrichtung und einem Eingangsventil bzw. einer Einlassdüse des aufblasbarem Gegenstands ein in einem an die Ventil- und Verteilereinrichtung angeschlossenen Dichtmittelbehälter befindliches Dichtmittel in den aufblasbaren Gegenstand gefördert wird und gleichzeitig der aufblasbare Gegenstand abgedichtet und auf einen vorgegebenen Betriebsdruck aufgepumpt wird,
   **dadurch gekennzeichnet, dass** im bzw. hinter dem Eingangsventil / der Einlassdüse das Dichtmittel mindestens teilweise zu einem Aerosol zerstäubt wird, indem das Dichtmittel bzw. das Dichtmittel-Luft-Gemisch im Eingangsventil bzw. in der Einlassdüse in eine turbulente Strömung mit einer Reynoldszahl $R_e \geq 2300$ überführt wird, wobei die Reynoldszahl der folgenden Gleichung/Ungleichung genügt

$$R_e = \sqrt{2}\, D \sqrt{p \, \frac{\rho}{\eta_0^2 \cdot e^{\frac{2\kappa}{T_0 + \Delta T}}}} \geq 2300 \quad ,$$

   in der die folgende Parameter enthalten sind:

   $T_0$: Umgebungstemperatur,
   D: Charakterischer Durchmesser des Eingangsventil bzw. der Einlassdüse,
   $\Delta T$: Differenz zwischen der Temperatur im Eingangsventil bzw. in der Einlassdüse und der Umgebungstemperatur,
   p: Förderdruck des Dichtmittels bzw. Dichtmittel-Luft-Gemisches,
   p: Dichte des Dichtmittels bzw. Dichtmittel-Luft-Gemisches ,
   $\eta_0$ Grenzviskosität des Dichtmittels bzw. Dichtmittel-Luft-Gemisches
   $\kappa$ charakteristische Temperatur des Dichtmittels bzw. Dichtmittel-Luft-Gemisches.

2. Verfahren nach Anspruch 1, bei dem bei einem Förderdruck p des Kompressors von 200 bis 600 kPa das Eingangsventil bzw. die Einlassdüse so erwärmt wird, dass die Temperaturdifferenz $\Delta T$ des Eingangsventils bzw. der Einlassdüse zur Umgebungstemperatur mindestens 10°C, vorzugsweise mindestens 40°C beträgt.

3.   Verfahren nach Anspruch 2, bei dem die Erwärmung des Eingangsventils bzw. der Einlassdüse durch eine Erhöhung der Auslasstemperatur des Kompressors dadurch erfolgt, dass eine Kolbenhubfrequenz von mindestens 2000 Hüben pro Minute verwendet wird.

4.   Verfahren nach einem der Ansprüche 2 oder 3, bei dem die Erwärmung des Eingangsventils bzw. der Einlassdüse durch eine elektrische Heizung erfolgt.

5.   Vorrichtung zur Durchführung des Verfahrens nach Anspruch 1 bis 4, wobei die Vorrichtung einen durch vorzugsweise einen Elektromotor angetriebenen Kompressor zur Erzeugung des Abdicht- bzw. Pumpdrucks aufweist, sowie mindestens eine Ventil- und Verteilereinrichtung für Dichtmittel und Druckgas, welche Anschlüsse aufweist für einen Behälter mit Dichtmittel und für Druckluft- bzw- Dichtmittelschläuche zwischen Ventil- und Verteilereinrichtung und einem Eingangsventil bzw. einer Einlassdüse des aufblasbarem Gegenstands, welche weiterhin ggf. Verbindungsmittel zur Energiezufuhr, Schalt-, und/oder Steuer- und Anzeigeeinrichtungen für den Betrieb der Vorrichtung aufweist, wobei der Kompressor bzw. die Kompressorbauteile eine thermische Isolation aufweisen oder mindestens teilweise aus Kunststoff bestehen, **dadurch gekennzeichnet, dass** der Vorrichtung ein den Kompressor kühlender Ventilator zugeordnet ist, der abhängig von der Temperaturdifferenz $\Delta T$ des Eingangsventils bzw. der Einlassdüse steuerbar ist.

6.   Vorrichtung nach Anspruch 5, bei der die Druckluft- bzw- Dichtmittelschläuche zwischen Ventil- und Verteilereinrichtung und dem Eingangsventil bzw. der Einlassdüse des aufblasbaren Gegenstands thermisch isoliert sind oder aus Kunststoff bestehen.

7.   Vorrichtung nach Anspruch 5 oder 6, versehen mit Einrichtungen zur Aufhängung oder Befestigung am aufblasbaren Gegenstand bzw. am Kraftfahrzeugreifen und in unmittelbarer Nähe des Eingangsventils bzw. der Einlassdüse.

8.   Dichtmittels zur Ausführung des Verfahrens nach Anspruch 1, **dadurch gekennzeichnet, dass** das durch Zerstäubung entstandene Aerosol in seiner kondensierten Form folgende Bestandteile enthält:

     a) 2 - 25%, vorzugsweise 3 - 20% Latex, bezogen auf den Feststoffgehalt,
     b) 2 - 25%, vorzugsweise 3 - 20% eines Klebrigmachers, bezogen auf den Feststoffgehalt,
     c) 2 - 40%, vorzugsweise 5 - 30% eines oder mehrerer Glykole mit einem Dampfdruck von 5-15 Pa bei 20°C einem Siedepunkt von 180°C bis 220°C, und
     d) 20 - 85%, vorzugsweise 30 - 80% Wasser, **dadurch gekennzeichnet, dass** die mittlere Partikelgröße des Klebrigmachers kleiner als 0,4 $\mu$m ist.

9.   Dichtmittel nach Anspruch 8, bei dem das Latex mindestens teilweise Naturlatex ist.

10.  Dichtmittel nach Anspruch 8 oder 9, bei dem der Klebrigmacher ein Klebeharz ist, vorzugsweise eine Kolophoniumharzdispersion.

11.  Dichtmittel nach einem der Ansprüche 8 bis 10, bei dem die mittlere Partikelgröße des Klebrigmachers kleiner als 0,3 $\mu$m ist.

12.  Dichtmittel nach einem der Ansprüche 8 bis 11, enthaltend ein oder mehrere tensidische Sulfonate, vorzugsweise anionische Mono- oder Di-Sulfonate und/oder eines oder mehrere Alkylarylethersulfate.

13.  Dichtmittel nach Anspruch 12, bei dem die Konzentration der Tenside 0,5 - 5,0% beträgt.

14.  Dichtmittel nach Anspruch 8 bis 13, bei dem die Glykole vorzugsweise aus der Gruppe, 1,2-Butandiol, 1,3-Butandiol, 1,2-Propandiol und/oder Glycerin sind.

## Claims

1.   Method for sealing and inflating inflatable articles, in particular for sealing and inflating motor vehicle tyres, wherein, by means of a compressor which is driven preferably by means of an electric motor, a sealing and pumping pressure is generated, wherein, by means of the sealing and pumping pressure, via a valve and distributor device for sealant and compressed gas and via compressed-air and sealant hoses between valve and distributor device and an entry valve or an inlet nozzle of the inflatable article, a sealant situated in a sealant vessel connected to the valve and distributor device is conveyed into the inflatable article and, at the same time, the inflatable article is sealed and inflated to a predefined operating pressure,

**characterized in that**, in or downstream of the entry valve/the inlet nozzle, the sealant is at least partially atomized to form an aerosol by virtue of the sealant or the sealant-air mixture being converted, in the entry valve or in the inlet nozzle, into a turbulent flow with a Reynolds number $R_e \geq 2300$, wherein the Reynolds number satisfies the following equation/inequation:

$$R_e = \sqrt{2}D \sqrt{p \frac{\rho}{\eta_0^2 \cdot e^{\frac{2\kappa}{T_0 + \Delta T}}}} \geq 2300 \quad ,$$

which comprises the following parameters:

$T_0$: ambient temperature,
$D$: characteristic diameter of the entry valve or of the inlet nozzle,
$\Delta T$: difference between the temperature in the entry valve or in the inlet nozzle and the ambient temperature,
$p$: conveying pressure of the sealant or sealant-air mixture,
$\rho$: density of the sealant or sealant-air mixture,
$\eta_0$ intrinsic viscosity of the sealant or sealant-air mixture,
$\kappa$ characteristic temperature of the sealant or sealant-air mixture.

2. Method according to Claim 1, in which, in the case of a conveying pressure p of the compressor of 200 to 600 kPa, the entry valve or the inlet nozzle is warmed such that the temperature difference $\Delta T$ of the entry valve or of the inlet nozzle with respect to the ambient temperature amounts to at least 10°C, preferably at least 40°C.

3. Method according to Claim 2, in which the warming of the entry valve or of the inlet nozzle is realized by means of an increase of the outlet temperature of the compressor, by virtue of a piston stroke frequency of at least 2000 strokes per minute being used.

4. Method according to either of Claims 2 and 3, in which the warming of the entry valve or of the inlet nozzle is performed by means of an electric heater.

5. Device for carrying out the method according to Claim 1 to 4, wherein the device has a compressor, which is driven preferably by means of an electric motor, for generating the sealing and pumping pressure, and has at least one valve and distributor device for sealant and compressed gas, which valve and distributor device has ports for a vessel with sealant and for compressed-air and sealant hoses between valve and distributor device and an entry valve or an inlet nozzle of the inflatable article, and which valve and distributor device furthermore possibly has connecting means for energy supply, switching and/or control and display devices for the operation of the device, wherein the compressor or the compressor components exhibit thermal insulation or are at least partially composed of plastic, **characterized in that** the device is assigned a fan which cools the compressor and which is controllable in a manner dependent on the temperature difference $\Delta T$ of the entry valve or of the inlet nozzle.

6. Device according to Claim 5, in which the compressed-air and sealant hoses between valve and distributor device and the entry valve or the inlet nozzle of the inflatable article are thermally insulated or are composed of plastic.

7. Device according to Claim 5 or 6, equipped with means for suspension on or fastening to the inflatable article or to the motor vehicle tyre and in the direct vicinity of the entry valve or of the inlet nozzle.

8. Sealant for carrying out the method according to Claim 1, **characterized in that** the aerosol formed by atomization comprises, in its condensed form, the following constituents:

a) 2 - 25%, preferably 3 - 20% latex, with regard to solids content,
b) 2 - 25%, preferably 3 - 20% of a tackifier, with regard to solids content,
c) 2 - 40%, preferably 5 - 30% of one or more glycols with a vapor pressure of 5-15 Pa at 20°C and a boiling point of 180°C bis 220°C, and

d) 20 - 85%, preferably 30 - 80% water, **characterized in that** the mean particle size of the tackifier is smaller than 0.4 $\mu$m.

9.  Sealant according to Claim 8, in which the latex is at least partially natural latex.

10. Sealant according to Claim 8 or 9, in which the tackifier is an adhesive resin, preferably a rosin resin dispersion.

11. Sealant according to one of Claims 8 to 10, in which the mean particle size of the tackifier is smaller than 0.3 $\mu$m.

12. Sealant according to one of Claims 8 to 11, comprising one or more surfactant sulfonates, preferably anionic mono- or disulfonates and/or one or more alkyl aryl ether sulfates.

13. Sealant according to Claim 12, in which the concentration of surfactants amounts to 0.5 - 5.0%.

14. Sealant according to Claim 8 to 13, in which the glycols are preferably from the group 1,2-butanediol, 1,3-butanediol, 1,2-propanediol and/or glycerin.

## Revendications

1.  Procédé pour étancher et gonfler des objets gonflables, en particulier pour étancher et gonfler des pneus de véhicules à moteur, dans lequel, à l'aide d'un compresseur entraîné de préférence par un moteur électrique, une pression d'étanchéité ou de pompage est produite, procédé dans lequel, à l'aide de la pression d'étanchéité ou de pompage, par l'intermédiaire d'un dispositif de valve et de répartiteur d'un produit d'étanchéité et de gaz sous pression et par des flexibles d'air comprimé ou de produit d'étanchéité entre le dispositif de valve et de répartiteur et une valve d'entrée ou une buse d'admission de l'objet gonflable, un produit d'étanchéité, se trouvant dans un récipient de produit d'étanchéité raccordé au dispositif de valve et de répartiteur, est refoulé dans l'objet gonflable et simultanément l'objet gonflable est étanché et est gonflé à une pression de service prédéfinie,

    **caractérisé en ce que,** dans ou à l'arrière de la valve d'entrée/de la buse d'admission, le produit d'étanchéité est au moins partiellement pulvérisé pour former un aérosol, le produit d'étanchéité ou le mélange produit d'étanchéité-air étant, dans la valve d'entrée ou dans la buse d'admission, converti en un courant turbulent présentant un nombre de Reynolds $R_e \geq 2\,300$, le nombre de Reynolds satisfaisant à l'égalité/l'inégalité suivante

    $$R_e = \sqrt{2}D\sqrt{p\frac{\rho}{\eta_0^2 \cdot e^{\frac{2\kappa}{T_0+\Delta T}}}} \geq 2300 \quad ,$$

    contenant les paramètres suivants :

    $T_0$ : température ambiante,
    D : diamètre caractéristique de la valve d'entrée ou de la buse d'admission,
    $\Delta T$ : différence entre la température dans la valve d'entrée ou dans la buse d'admission et la température ambiante,
    p : pression de refoulement du produit d'étanchéité ou du mélange produit d'étanchéité-air,
    p : masse volumique du produit d'étanchéité ou du mélange produit d'étanchéité-air,
    $\eta_0$ : viscosité limite du produit d'étanchéité ou du mélange produit d'étanchéité-air,
    $\kappa$ : température caractéristique du produit d'étanchéité ou du mélange produit d'étanchéité-air.

2.  Procédé selon la revendication 1, dans lequel, pour une pression de refoulement p du compresseur de 200 à 600 kPa, la valve d'entrée ou la buse d'admission est chauffée de telle sorte que la différence de température $\Delta T$ de la valve d'entrée ou de la buse d'admission par rapport à la température ambiante soit d'au moins 10 °C, de préférence d'au moins 40 °C.

3.  Procédé selon la revendication 2, dans lequel le chauffage de la valve d'entrée ou de la buse d'admission est réalisé par une élévation de la température de sortie du compresseur, par utilisation d'une fréquence de course du piston d'au moins 2 000 courses par minute.

**4.** Procédé selon l'une des revendications 2 ou 3, dans lequel le chauffage de la valve d'entrée ou de la buse d'admission est réalisé par un chauffage électrique.

**5.** Dispositif pour la mise en œuvre du procédé selon les revendications 1 à 4, le dispositif comportant un compresseur, entraîné de préférence par un moteur électrique, pour la production de la pression d'étanchéité ou de pompage, ainsi qu'au moins un dispositif de valve et de répartiteur pour un produit d'étanchéité et un gaz sous pression, qui comprend des raccordements pour un récipient comportant le produit d'étanchéité et pour des flexibles d'air comprimé ou de produit d'étanchéité entre le dispositif de valve et de répartiteur et une valve d'entrée ou une buse d'admission de l'objet gonflable, qui présente en outre éventuellement des moyens de liaison pour un apport d'énergie, des dispositifs de commutation et/ou de commande et d'affichage pour la marche du dispositif, le compresseur ou les composants du compresseur présentant une isolation thermique ou étant au moins partiellement constitués d'une matière plastique, **caractérisé en ce qu'**au dispositif est affecté un ventilateur refroidissant le compresseur, ventilateur qui peut être commandé en fonction de la différence de température $\Delta T$ de la valve d'entrée ou de la buse d'admission.

**6.** Dispositif selon la revendication 5, dans lequel les flexibles pour l'air comprimé ou le produit d'étanchéité entre le dispositif de valve et de répartiteur et la valve d'entrée ou la buse d'admission de l'objet gonflable sont thermiquement isolés ou sont constitués d'une matière plastique.

**7.** Dispositif selon la revendication 5 ou 6, pourvu de dispositifs pour suspension ou fixation à l'objet gonflable ou au pneu de véhicule à moteur et au voisinage immédiat de la valve d'entrée ou de la buse d'admission.

**8.** Produit d'étanchéité pour la mise en œuvre du procédé selon la revendication 1, **caractérisé en ce que** l'aérosol obtenu par pulvérisation contient, sous sa forme condensée, les constituants suivants :

a) 2 à 25 %, de préférence 3 à 20 % de latex, rapportés à l'extrait sec,
b) 2 à 25 %, de préférence 3 à 20 % d'un agent collant, rapportés à l'extrait sec,
c) 2 à 40 %, de préférence 5 à 30 % d'un ou plusieurs glycols ayant une pression de vapeur de 5 à 15 Pa à 20 °C et un point d'ébullition de 180 °C à 220 °C, et
d) 20 à 85 %, de préférence 30 à 80 % d'eau, **caractérisé en ce que** la granulométrie moyenne de l'agent collant est inférieure à 0,4 $\mu$m.

**9.** Produit d'étanchéité selon la revendication 8, dans lequel le latex est au moins partiellement un latex naturel.

**10.** Produit d'étanchéité selon la revendication 8 ou 9, dans lequel l'agent collant est une résine collante, de préférence une dispersion de résine de colophane.

**11.** Produit d'étanchéité selon l'une des revendications 8 à 10, dans lequel la granulométrie moyenne de l'agent collant est inférieure à 0,3 $\mu$m.

**12.** Produit d'étanchéité selon l'une des revendications 8 à 11, contenant un ou plusieurs sulfonates tensioactifs, de préférence des mono- ou des disulfonates anioniques et/ou un ou plusieurs alkylaryléthersulfates.

**13.** Produit d'étanchéité selon la revendication 12, dans lequel la concentration des tensioactifs est de 0,5 à 5,0 %.

**14.** Produit d'étanchéité selon les revendications 8 à 13, dans lequel les glycols sont de préférence du groupe 1,2-butanediol, 1,3-butanediol, 1,2-propanediol et/ou glycérol.

# Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202012101110 U1
- DE 29812740 U1
- DE 19948706 A1
- US 4501825 A
- DE 112014001275 T5
- EP 2889352 A1
- DE 112011100453 T5
- US 2012309867 A1
- DE 102014224491 A1